# EUROPEAN PATENT APPLICATION

(11) **EP 3 862 863 A1**
(43) Date of publication of application: **11.08.2021**
(21) Application number: 18939957.9
(22) Date of filing: 13.11.2018
(51) Int. Cl.: G06F 3/06

(54) **METHOD FOR MANAGING PERFORMANCE OF LOGICAL DISK, AND STORAGE ARRAY**

(71) Applicant: Huawei Technologies Co., Ltd., Shenzhen, Guangdong 518129 (CN)
(72) Inventor: DENG, Yuchun, Shenzhen, Guangdong 518129 (CN); DU, Yumin, Shenzhen, Guangdong 518129 (CN)
(74) Representative: Pfenning, Meinig & Partner mbB
(86) International application number: PCT/CN2018/115162
(87) International publication number: WO 2020/097781

(57) **Abstract**

A method for managing performance of a logical disk and a storage array are disclosed. The method is performed by a controller of the storage array, the storage array further includes a memory and a physical disk, and a plurality of logical disks are created on the physical disk. Each logical disk corresponds to a setting ratio, where the setting ratio is a preset ratio of first metadata of each logical disk that is loaded into the memory to first metadata of each logical disk, and the first metadata of each logical disk is metadata about data in each logical disk. The method includes: when metadata about to-be-manipulated data in a manipulated logical disk is to be written into the memory, determining whether a current ratio of first metadata of the manipulated logical disk that is loaded into the memory to first metadata of the manipulated logical disk reaches a setting ratio corresponding to the manipulated logical disk; and when the current ratio reaches the setting ratio corresponding to the manipulated logical disk, evicting, by using a memory eviction algorithm, a part of the first metadata of the manipulated logical disk in the memory, and storing the metadata about the to-be-manipulated data to the memory.

## Description

### TECHNICAL FIELD

This application relates to the storage field, and in particular, to a method for managing performance of a logical disk and a storage array.

### BACKGROUND

Usually, a plurality of logical disks (for example, a logical unit LUN or a namespace Namespace) are created in a storage array. Because each logical disk provides a different service, a user has a different performance requirement for each logical disk.

In the prior art, a performance threshold is limited for each logical disk. When performance of each logical disk such as IOPS reaches the specified threshold, the IOPS of the logical disk is reduced, so as to prevent the logical disks from contending for system resources. However, in this manner, only a maximum performance value is set for each logical disk, but minimum performance of each logical disk cannot be guaranteed. Consequently, effective grading cannot be implemented for the logical disks.

### SUMMARY

Embodiments of the present invention provide a method for managing performance of a logical disk and a storage array, so as to ensure minimum performance of logical disks of different levels while saving memory space.

A first aspect of the embodiments of the present invention provides a method for managing performance of a logical disk. The method is performed by a controller of a storage array. The storage array further includes a memory and a physical disk, where a plurality of logical disks are created on the physical disk. Each logical disk corresponds to a setting ratio, where the setting ratio is a preset ratio of first metadata of each logical disk that is loaded into the memory to first metadata of each logical disk, and the first metadata of each logical disk is metadata about data in each logical disk. The method includes: when metadata about to-be-manipulated data in a manipulated logical disk is to be written into the memory, determining whether a current ratio of first metadata of the manipulated logical disk that is loaded into the memory to first metadata of the manipulated logical disk reaches a setting ratio corresponding to the manipulated logical disk; and when the current ratio reaches the setting ratio corresponding to the manipulated logical disk, evicting, by using a memory eviction algorithm, a part of the first metadata of the manipulated logical disk in the memory, and storing the metadata about the to-be-manipulated data to the memory. In this embodiment of the present invention, a ratio of metadata about data in each logical disk that is loaded into the memory to metadata of each logical disk is set for each logical disk, so that for a logical disk with a low performance requirement, only metadata of the setting ratio is loaded into the memory, thereby saving memory space. This can also ensure that a current ratio of metadata of a logical disk that is loaded into the memory to metadata of the logical disk does not exceed the setting ratio, thereby ensuring minimum performance of the logical disk.

Optionally, the method further includes: when the current ratio of the first metadata of the manipulated logical disk that is loaded into the memory to the first metadata of the manipulated logical disk does not reach the setting ratio corresponding to the manipulated logical disk, storing the metadata about the to-be-manipulated data to the memory, and updating the current ratio.

After the metadata about the to-be-manipulated data is written into the memory, the current ratio is immediately updated. This can ensure determining accuracy.

Optionally, each logical disk further includes second metadata, where the second metadata is used to indicate the first metadata of each logical disk that is loaded into the memory, and the method further includes: after the metadata about the to-be-manipulated data is written into the memory, recording a storage address of the metadata about the to-be-manipulated data in the memory into the second metadata; and when the part of the first metadata of the manipulated logical disk is evicted from the memory, recording an address of the evicted metadata in the physical disk into the second metadata.

The second metadata is set, so that the metadata about the to-be-manipulated data can be found quickly, thereby improving data access efficiency. Optionally, the method further includes: receiving a write request, where the write request includes to-be-written data, a logical unit number, and a logical address of the to-be-written data, the to-be-manipulated data is the to-be-written data, and the logical unit number indicates the manipulated logical disk; when the to-be-written data is written into a physical disk corresponding to the to-be-manipulated logical disk, generating metadata about the to-be-written data; storing the metadata about the to-be-written data to the physical disk corresponding to the to-be-manipulated logical disk and the memory; and updating the current ratio.

After the write request is received, and the metadata about the to-be-written data is written into the memory, the current ratio is immediately updated. This can ensure determining accuracy.

Optionally, when the metadata about the to-be-written data is written into the memory, an index number is generated based on the logical address of the to-be-written data, and the generated index number and an address of the metadata about the to-be-written data in the memory are recorded into the second metadata. The metadata about the to-be-written data is recorded into the second metadata by using the index number, so that during subsequent access of the metadata about the to-be-written data, the metadata about the to-be-written data can be found quickly, and therefore to-be-accessed data is found quickly, thereby improving data access efficiency.

Optionally, the method further includes: receiving a read request; determining whether metadata about to-be-read data is stored in the memory, where the to-be-manipulated data is the to-be-read data; and if the metadata about the to-be-read data is not stored in the memory, obtaining the metadata about the to-be-read data from the manipulated physical disk, and writing the metadata about the to-be-read data into the memory.

Optionally, the determining whether metadata about to-be-read data is stored in the memory includes: generating an index number based on a logical address of the to-be-read data in the read request; and searching, based on the index number, the second metadata of the manipulated logical disk for an address that corresponds to the index number and that is of the metadata about the to-be-read data; and when the second metadata indicates that the address of the metadata about the to-be-read data is in the memory, obtaining the metadata about the to-be-read data from the memory; or when the second metadata indicates that the address of the metadata about the to-be-read data is not in the memory, obtaining the metadata about the to-be-read data from the physical disk.

The metadata about the to-be-read data can be read quickly by using the second metadata, thereby improving data access efficiency.

A second aspect of the present invention provides a storage array, where the storage array includes a memory and at least one physical disk, at least one logical disk is created on the physical disk, each logical disk corresponds to a setting ratio, and the setting ratio is a preset ratio of first metadata of each logical disk that is loaded into the memory to first metadata of each logical disk, where the first metadata of each logical disk is metadata about data in each logical disk. The storage array includes a plurality of functional modules, functions performed by the functional modules correspond to the method steps in the first aspect of the embodiments of the present invention, and details are not described herein again.

A third aspect of the present invention further provides a storage array, where the storage array includes a memory and at least one physical disk, at least one logical disk is created on the physical disk, each logical disk corresponds to a setting ratio, and the setting ratio is a preset ratio of first metadata of each logical disk that is loaded into the memory to first metadata of each logical disk, where the first metadata of each logical disk is metadata about data in each logical disk. The internal memory further stores a program instruction, and the controller executes the program instruction to perform each step in the method provided in the first aspect of the embodiments of the present invention.

A fourth aspect of the present invention provides a readable storage medium, where the readable storage medium stores a program instruction, and each step in the method provided in the first aspect of the embodiments of the present invention can be performed by running the program instruction.

### BRIEF DESCRIPTION OF DRAWINGS

FIG. 1 is a hardware structural diagram of a storage array;
FIG. 2 is a ratio of metadata in a memory to metadata in a physical disk, set for a logical disk with each performance level according to an embodiment of the present invention;
FIG. 3 is a flowchart of a method for managing a performance level of a logical disk when a write request is received according to a first embodiment of the present invention;
FIG. 4 is a flowchart of a method for managing a performance level of a logical disk when a read request is received according to a first embodiment of the present invention;
FIG. 5 is a schematic diagram of second metadata according to a second embodiment of the present invention;
FIG. 6 is a flowchart of a method for managing a performance level of a logical disk when a write request is received according to a second embodiment of the present invention;
FIG. 7 is a flowchart of a method for managing a performance level of a logical disk when a read request is received according to a second embodiment of the present invention;
FIG. 8 is a module diagram of a storage array according to a first embodiment of the present invention; and
FIG. 9 is a module diagram of a storage array according to a second embodiment of the present invention.

### DESCRIPTION OF EMBODIMENTS

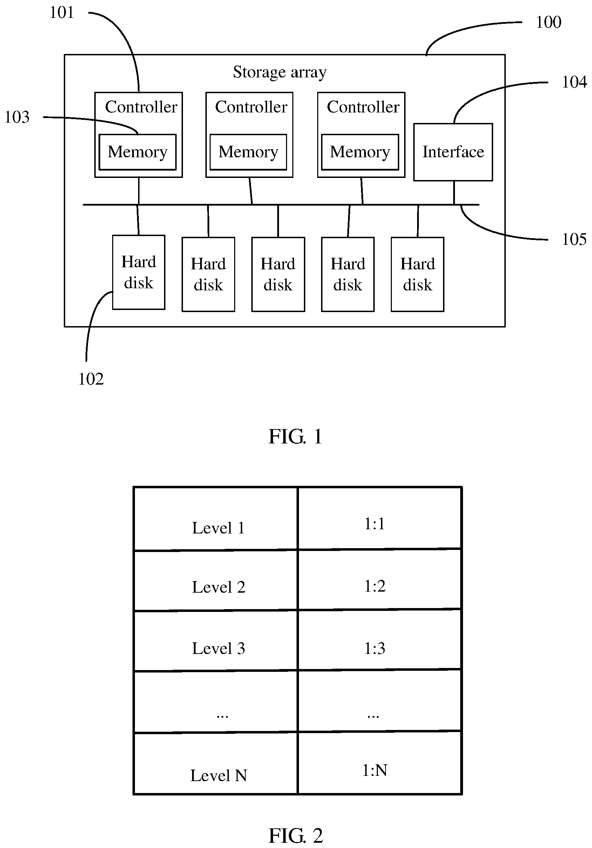

FIG. 1 is a hardware structural diagram of a storage array 100 according to an embodiment of the present invention. The storage array 100 includes at least one controller 101, a plurality of physical disks 102, an interface 104, and a bus 105. The at least one controller 101, the plurality of physical disks 102, and the interface are connected to the bus 105, and the at least controller 101 accesses the plurality of physical disks 102 through the bus. The interface 104 is configured to be connected to a host (not shown in the figure) and transmit an access request received from the host to the at least one controller 101 for processing. Each controller 101 includes a memory 103. Data cached in the memory 103 includes data generated during running of the controller 101, and data read from the physical disks 102. In this embodiment of the present invention, the plurality of physical disks 102 may be solid state disks (Solid State Disk, SSD), or may be hard disks (Hard disk). Based on physical space constructed by the plurality of the physical disks 102, the controller 101 creates a plurality of logical disks (not shown in the figure) by using a redundant array of independent disks (redundant arrays of independent Drives, RAID) algorithm. The logical disk may be a namespace (Namespace) defined in a non-volatile memory express (Non-Volatile Memory express, NVMe) protocol, or may be a logical unit number (Logic Unit Number, LUN) in a small computer system interface (Small Computer System Interface, SCSI) protocol. The created logical disk is provided for the host to use. The host accesses the physical disk 102 by accessing the logical disks. Each of the at least one controller 101 manipulates data in a same manner. For ease of description, one controller 101 is used as an example for description below.

After data is written into the physical disk 102, the controller 101 generates metadata about the data, where the metadata records a property of the data written into the physical disk 102, with a logical address in a write request sent by a host as an index. The property of the data includes, for example, a physical storage address of the data in the physical disk, and information about whether the data is deduplicated or compressed. Metadata about data written into one logical disk is recorded together. For ease of description, the metadata about the data written into one logical disk is referred as first metadata of the logical disk below.

When the controller 101 receives a data access request such as a rewrite request or a read request, the controller 101 first finds metadata about to-be-accessed data based on a logical disk identifier and a logical address in the data access request, and then finds the to-be-accessed data based on the metadata.

When the metadata about the to-be-accessed data is in the memory 103, the controller 101 may directly read the metadata about the to-be-accessed data from the memory 103, then find the to-be-accessed data based on the metadata about the to-be-accessed data, and load the to-be-accessed data from the physical disk 102 to the memory. In this way, only one read operation is required for obtaining the to-be-accessed data. When the metadata about the to-be-accessed data is not in the memory 103, the controller 101 first needs to read the metadata about the to-be-accessed data from the physical disk 102 into the memory 103, then find the to-be-accessed data based on the metadata about the to-be-accessed data, and read the to-be-accessed data into the memory. In this way, two read operations are required for obtaining the to-be-accessed data. Compared with that only one read operation is required, two read operations reduce efficiency of accessing the to-be-accessed data by 50%.

In this embodiment of the present invention, a setting ratio can be set for each logical disk based on different performance obtained when the metadata of the to-be-accessed data is in the memory and when the metadata of the to-be-accessed data is in the physical disk, where the setting ratio is a ratio of first metadata of each logical disk that is loaded into the memory to first metadata of each logical disk. A part of the first metadata of the logical disk that is stored in the physical disk 102 is loaded into the memory 103, and the first metadata loaded into the memory 102 is still stored in the physical disk 102. Therefore, a ratio of the first metadata of the logical disk that is loaded into the memory 103 to all the first metadata of the logical disk is the setting ratio corresponding to the logical disk.

In an optional embodiment, different performance levels may be set for logical disks based on setting ratios. FIG. 2 is a schematic diagram of setting ratios set for performance levels. For example, a setting ratio corresponding to a logical disk with a performance level 1 is 1:1, that is, after the storage array 100 is powered on, first metadata of the logical disk with the performance level 1 can be all loaded into the memory 103, so that the controller 101 can read metadata about to-be-accessed data from the memory 103 at 100%. This can be considered that performance of the logical disk with the performance level 1 is 100%. A setting ratio corresponding to a logical disk with a performance level 2 is 1:2, that is, in a process during which data of the logical disk is being accessed, 50% of first metadata is loaded into the memory 103. In this case, a probability of hitting metadata about to-be-accessed data in the memory 103 by the controller 101 is 50%, and performance of the logical disk with the performance level 2 is: (50% × 1 + 50% × 0.5) = 75%. A setting ratio corresponding to a logical disk with a performance level 3 is 1:3, that is, in a process during which data of the logical disk is being accessed, 33% of first metadata is loaded into the memory 103, and other 67% of the first metadata needs to be read from the physical disk 102. In this case, a probability of hitting the first metadata in the memory 103 by the controller 101 is 33%, and performance of the logical disk with the performance level 3 is: (33% × 1 + 67% × 0.5) = 67%. Others can be deduced by analogy. Compared to the 100% performance corresponding to the performance level 1, performance of a logical disk with a performance level N is: (1/N + (N - 1)/N × 0.5) = (N + 1)/2N.

In actual application, a logical disk with a corresponding performance level can be created for a user based on fees paid by the user. For example, if a user buys a logical disk with the performance level 1, during creation of the logical disk, a performance level 1 label can be added for the logical disk. If the user buys a logical disk with the performance level 2, during creation of the logical disk, a performance level 2 label can be added for the logical disk. By analogy, if the user buys a logical disk with a performance level N, a performance level N label is added for the logical disk created for the user.

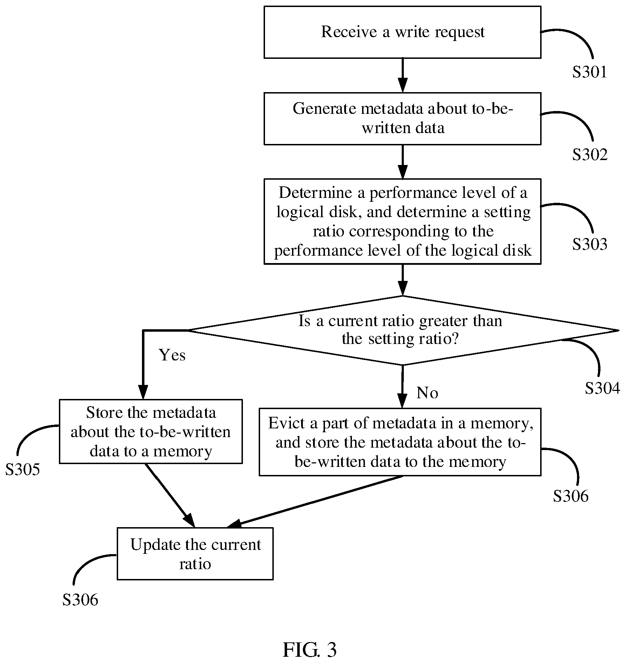

FIG. 3 is a flowchart of processing a received write request by the controller 101 of the storage array according to a first embodiment of the present invention.

Step S301: Receive a write request, where the write request carries a logical disk identifier, to-be-written data, and a logical address of the to-be-written data. The logical disk identifier is an identifier of a logical disk into which the to-be-written data is to be written, and the logical disk into which the to-be-written data is to be written is a manipulated logical disk.

Step S302: When the to-be-written data is written into a physical disk corresponding to the logical disk, metadata about the to-be-written data is generated. Whether a write-through (write-through) manner or a write-back (write-back) manner is used, the metadata about the to-be-written data is generated only when the to-be-written data is written into the physical disk. For the write-through manner, because the to-be-written data is written into a memory and the physical disk at a same time, the metadata about the to-be-written data is generated after the data is written successfully. For the write-back manner, because the to-be-written data is first written into the memory, the metadata about the to-be-written data is generated only after the to-be-written data is evicted from the memory by using a memory eviction algorithm, and written into the physical disk.

Step S303: Obtain a setting ratio of the manipulated logical disk. In an optional embodiment, a performance level set for the logical disk during creation of the logical disk is first determined, and the setting ratio corresponding to the performance level is determined based on the determined performance level in FIG. 2.

Step S304: Determine whether a current ratio of first metadata of the manipulated logical disk that is loaded into the memory 103 to first metadata of the manipulated logical disk reaches the setting ratio corresponding to the manipulated logical disk.

In this embodiment of the present invention, when the storage array 100 is just powered on, because the setting ratio corresponding to a logical disk with a performance level 1 is 1:1, the controller 101 loads all of first metadata of the logical disk with the performance level 1 to the memory 103. For a logical disk with another performance level, when an access request is received, metadata about to-be-accessed data in the access request is loaded into the memory 103, or newly-generated metadata is stored to the memory 103. Each time first metadata of the logical disk in the memory 103 is updated, or first metadata of the logical disk in a physical disk is updated, the controller 101 updates a current ratio of the first metadata of the logical disk that is loaded into the memory 103 to the first metadata of the logical disk.

Step S305: When the current ratio of first metadata of the manipulated logical disk that is loaded into the memory to first metadata of the manipulated logical disk does not reach the setting ratio corresponding to the manipulated logical disk, the controller 101 stores the metadata about the to-be-written data to the memory 103.

S306: When the ratio of first metadata of the manipulated logical disk that is loaded into the memory to first metadata of the manipulated logical disk reaches the setting ratio corresponding to the manipulated logical disk, the controller 101 evicts, by using a memory eviction algorithm, a part of the first metadata of the manipulated logical disk that is loaded into the memory 103, and stores the metadata about the to-be-written data to the memory 103. The evicted metadata is cold metadata with a same amount as the metadata about the to-be-written data. The cold metadata is metadata that is not accessed or is seldom accessed within a period of time.

Step S307: After the metadata about the to-be-written data is stored to the memory in step S305 or step S306, update the current ratio of the first metadata of the logical disk that is loaded into the memory 103 to the first metadata of the logical disk.

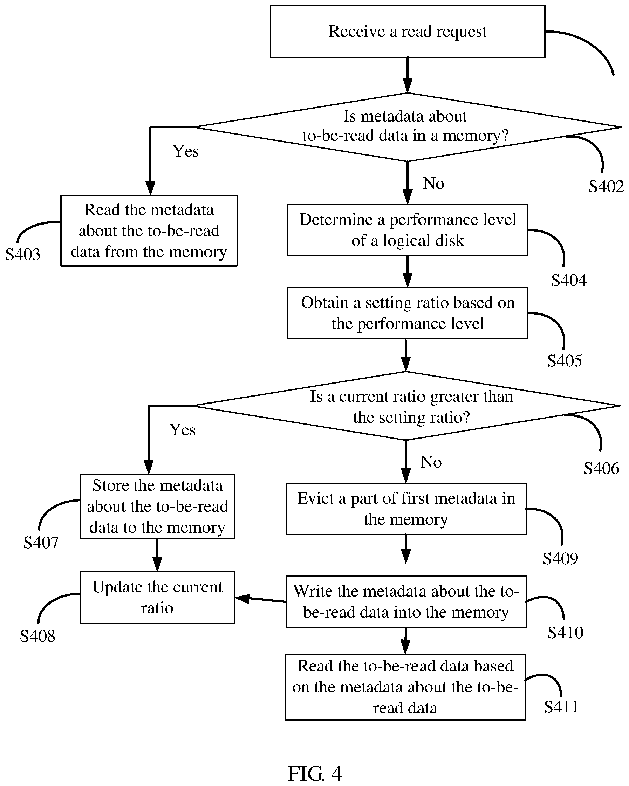

FIG. 4 is a flowchart of processing a received read request by the controller 101 of the storage array according to a first embodiment of the present invention.

Step S401: Receive a read request, where the read request carries a logical disk identifier and a logical address of to-be-read data.

Step S402: Determine, based on the logical disk identifier and the logical address in the read request, whether metadata about the to-be-read data is in the memory 103, where the logical disk identifier in the read request indicates a manipulated logical disk.

The metadata about the to-be-read data records the logical address of the data. Therefore, first metadata of the manipulated logical disk may be first searched for in the memory 103 based on the logical disk identifier, and then whether the logical address is included in the first metadata is determined. If the logical address is included in the first metadata, it is determined that the metadata about the to-be-read data is in the memory 103; or if the logical address is not included in the first metadata, it is determined that the metadata about the to-be-read data is not in the memory 103.

Step S403: When determining that the metadata about the to-be-read data is in the memory 103, the controller 101 reads the metadata about the to-be-read data from the memory 103, and reads the to-be-read data based on the metadata about the to-be-read data.

Step S404: When determining that the metadata about the to-be-read data is not in the memory 103, the controller 101 determines a performance level of the logical disk.

Step S405: The controller 101 obtains a setting ratio of the logical disk with the performance level from FIG. 2 based on the performance level.

Step S406: Determine whether a current ratio of first metadata of the manipulated logical disk that is loaded into the memory to first metadata of the manipulated logical disk reaches the setting ratio of the logical disk.

Step S407: When the current ratio of the first metadata of the manipulated logical disk that is loaded into the memory to the first metadata of the manipulated logical disk does not reach the setting ratio of the logical disk, the controller 101 writes the metadata about the to-be-read data into the memory 103, and obtains the to-be-read data based on the metadata about the to-be-read data.

Step S408: Update the current ratio of the first metadata of the manipulated logical disk that is loaded into the memory to the first metadata of the manipulated logical disk.

Step S409: When the current ratio of the first metadata of the manipulated logical disk that is loaded into the memory to the first metadata of the manipulated logical disk reaches the setting ratio of the logical disk, evict, from the memory by using a memory eviction algorithm, cold metadata in the memory 103 whose amount is equal to that of the metadata about the to-be-read data.

Step S410: Write the metadata about the to-be-read data into the memory 103, and perform step S408.

Step S411: Read the to-be-read data based on the metadata about the to-be-read data.

In this embodiment of the present invention, different ratios of first metadata of a logical disk that is loaded into the memory to first metadata of the manipulated logical disk are set for logical disks with different performance levels. This can ensure that the logical disks with different performance levels have different access performance, and can also ensure minimum performance of each logical disk.

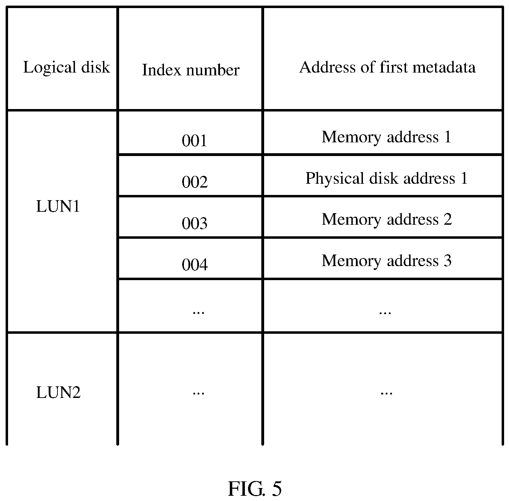

In a second embodiment of the present invention, second metadata is set to quickly determine whether metadata of to-be-accessed data is loaded into the memory 103, where the second metadata is used to indicate whether the first metadata is loaded into the memory 103. FIG. 5 is a schematic table of the second metadata. A logical disk column in the table records a logical disk identifier of a logical disk created in the storage array 100. An index number column records an index number of each logical address. When the controller 101 receives a write data request, to-be-written data in the write data request is written into a physical disk, and metadata about the to-be-written data is generated. Then, a corresponding logical disk is found in the second metadata based on a logical disk identifier in the write data request, an index number is generated based on a logical address in the write data request, the generated index number is added to an index number column of the corresponding logical disk, and a storage address of the metadata about the to-be-written data is recorded into a first metadata address column. After the first metadata is evicted from the memory 103, an address of the evicted metadata is changed to an address of the evicted metadata in a physical disk address, that is, a physical disk address. In this embodiment of the present invention, the index number can be generated by performing a hash operation on the logical address in the write data request. However, a manner of generating the index number based on the logical address is not limited in a hash algorithm.

In this embodiment of the present invention, first metadata of a logical disk with a performance level 1 is all loaded into the memory 103, while only a part of first metadata of a logical disk with another performance level is loaded into the memory 103. When an access data request is received, whether metadata about the to-be-accessed data is loaded into the memory 103 needs to be determined.

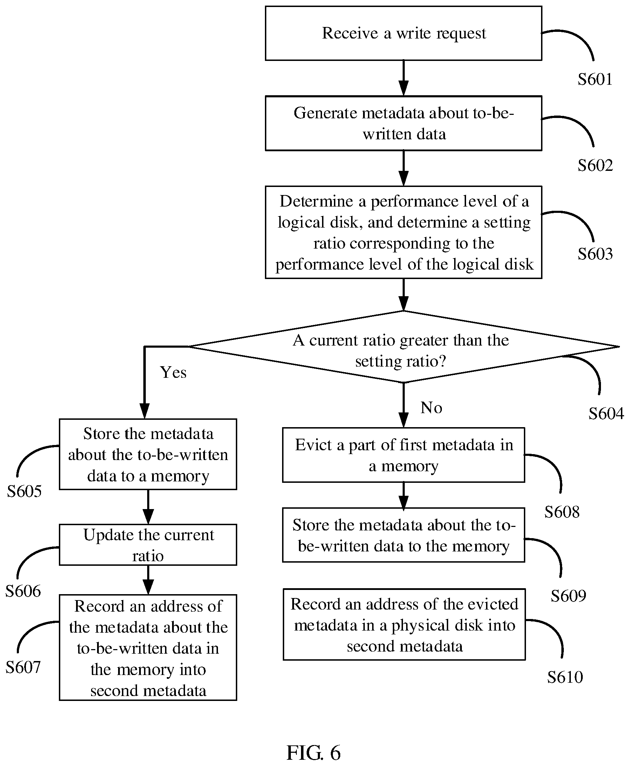

FIG. 6 is a flowchart of processing a received write request by the controller 101 of the storage array according to a second embodiment of the present invention. In this embodiment of the present invention, when the storage array 100 is just powered on, the second metadata is all loaded into the memory 103.

Steps S601 to S606 in the second embodiment are the same as steps S301 to S306 in the first embodiment, and details are not described herein again.

Step S607: The controller 101 generates an index number based on a logical address in the write request, adds the generated index number to second metadata of the logical disk, and records an address of the metadata about the to-be-written data in the memory 103 into a first metadata address corresponding to the index number in FIG. 3.

Steps S608 and S609 are the same as steps S307 to S308, and details are not described herein again.

Step S610: The controller 101 changes a second metadata address corresponding to the metadata evicted from the memory 103 to an address of the evicted metadata in the physical disk.

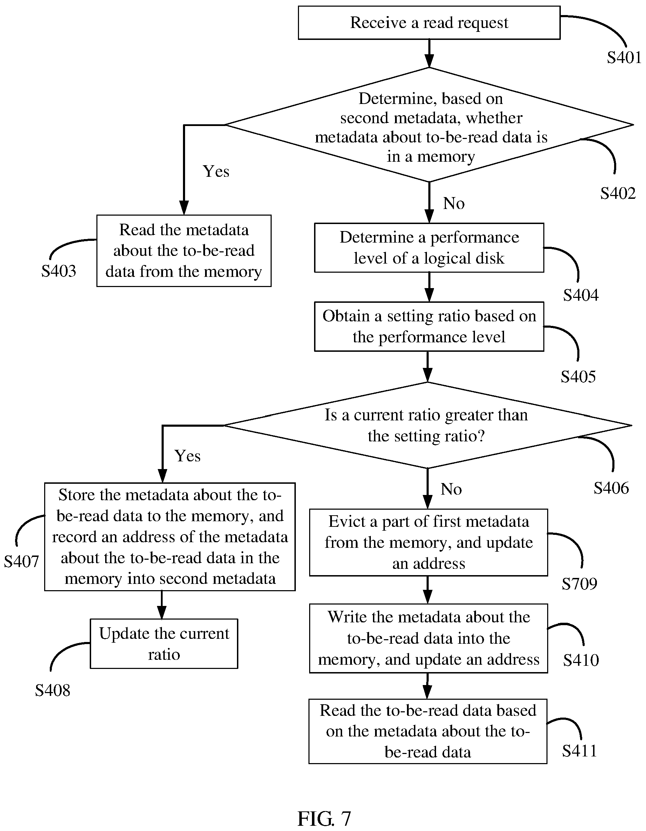

FIG. 7 is a flowchart of processing a received read request by the controller 101 of the storage array according to a second embodiment of the present invention.

Step S701: Receive a read request, where the read request carries a logical disk identifier, to-be-read data, and a logical address of the to-be-read data.

Step S702: Determine, based on the logical disk identifier, a logical disk in which the to-be-read data is located, generate an index number based on the logical address in the read request, and find, from the second metadata, address information, indicated by the index number, of metadata about the to-be-read data in the logical disk. In this embodiment of the present invention, the index number is generated based on the logical address in the read request by using a hash algorithm, but an algorithm for generating an index number in the present invention is not limited thereto.

Step S703: When the address information of the metadata about the to-be-read data indicates a memory address, the controller 101 reads the metadata about the to-be-read data from the memory 103, and then reads the to-be-read data based on the metadata about the to-be-read data.

Step S704: When the address information of the metadata about the to-be-read data indicates a physical disk address, the controller 101 determines a performance level of the logical disk.

Step S705: The controller 101 obtains a setting ratio corresponding to the logical disk with the performance level from FIG. 2 based on the performance level.

Step S706: Determine whether a current ratio of first metadata of the manipulated logical disk that is loaded into the memory to first metadata of the manipulated logical disk reaches the setting ratio corresponding to the manipulated logical disk.

Step S707: When the current ratio does not reach the setting ratio corresponding to the manipulated logical disk, the controller 101 writes the metadata about the to-be-read data to the memory 103, obtains the to-be-read data based on the metadata about the to-be-read data, and then changes, in the second metadata, an address of the metadata about the to-be-read data to a memory address.

Step S708: The controller updates the current ratio of the first metadata of the manipulated logical disk that is loaded into the memory to the first metadata of the manipulated logical disk.

Step S709: When the current ratio reaches the setting ratio corresponding to the manipulated logical disk, the controller evicts, from the memory 103 by using an eviction algorithm, cold metadata in the memory whose amount is equal to that of the metadata about the to-be-read data, and updates an address of the metadata evicted from the memory to a physical disk address.

Step S710: Read the metadata about the to-be-read data into the memory 103, and update, in the second metadata, the address of the metadata about the to-be-read data that is read into the memory to a memory address.

Step S711: The controller 101 reads the to-be-read data based on the metadata about the to-be-read data, and updates, in the second metadata, the address of the metadata about the to-be-read data that is read into the memory to the memory address, and the address of the metadata evicted from the memory to the physical disk address.

In the foregoing second embodiment of the present invention, a location of metadata about to-be-accessed data is recorded by using the second metadata. In this way, when a rewrite request or a read request is received, the metadata about the to-be-accessed data can be found quickly by using the second metadata, so that to-be-read or to-be-rewritten data can be found quickly, thereby improving data access efficiency.

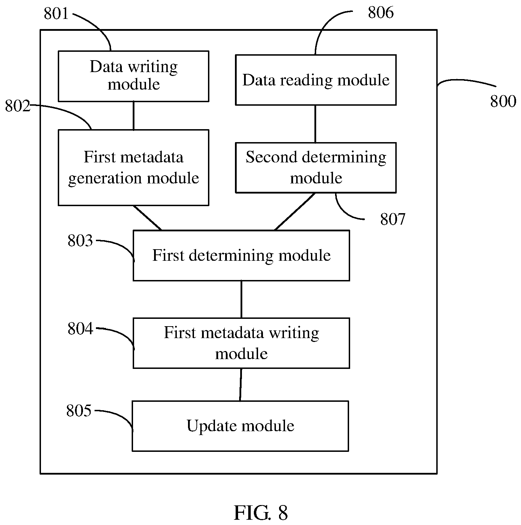

FIG. 8 is a module diagram of a storage array 800 according to a first embodiment of the present invention.

The storage array 800 includes a data writing module 801, a first metadata generation module 802, a first determining module 803, a first metadata writing module 804, an update module 805, a data reading module 806, and a second determining module 807.

The data writing module 801 is configured to receive a write request, where the write request carries a logical disk identifier, to-be-written data, and a logical address of the to-be-written data.

The first metadata generation module 802 is configured to generate metadata about the to-be-written data when the to-be-written data is written into a physical disk corresponding to a logical disk.

The first determining module 803 is configured to: determine a performance level set for the logical disk during creation of the logical disk; determine, from FIG. 2 based on the determined performance level, a setting ratio corresponding to the performance level; and determine whether a current ratio of first metadata of the manipulated logical disk that is loaded into a memory to first metadata of the manipulated logical disk reaches the setting ratio corresponding to the manipulated logical disk. For details, refer to functions performed in steps S303 and S304.

The first metadata writing module 804 is configured to: when the current ratio does not reach the setting ratio corresponding to the manipulated logical disk, store, for the controller 101, the generated metadata about the to-be-written data to the memory 103; or when the current ratio reaches the setting ratio corresponding to the manipulated logical disk, evict, for the controller 101, a part of the metadata in the memory 103 by using a memory eviction algorithm, and store the metadata about the to-be-written data to the memory 103. For details, refer to steps S305 and S307.

The update module 805 is configured to update the current ratio after the metadata about the to-be-written data is stored to the memory. For details, refer to step S306 and step S408.

The data reading module 806 is configured to receive a read request, and read to-be-read data based on first metadata. For details, refer to step S401 and step 411 in FIG. 4.

The second determining module 807 is configured to determine, based on a logical disk identifier and a logical address in the read request, whether metadata about the to-be-read data is in the memory 103. When it is determined that the metadata about the to-be-read data is in the memory 103, the controller 101 reads the metadata about the to-be-read data from the memory 103, and reads the to-be-read data based on the metadata about the to-be-read data. When it is determined that the metadata about the to-be-read data is not in the memory 103, the controller 101 determines a performance level of the logical disk. For details, refer to steps S402 to S404 in FIG. 4.

The first determining module 803 is further configured to: obtain, from FIG. 2 based on the performance level, a setting ratio corresponding to the logical disk with the performance level; and determine whether a current ratio of first metadata of the manipulated logical disk that is loaded into the memory to first metadata of the manipulated logical disk is greater than the setting ratio. When it is determined that the current ratio is greater than the setting ratio, the controller 101 writes the metadata about the to-be-read data into the memory 103, and obtains the to-be-read data based on the metadata about the to-be-read data.

The first metadata writing module 804 is configured to: when it is determined that the current ratio of the first metadata of the manipulated logical disk that is loaded into the memory to the first metadata of the manipulated logical disk does not reach the setting ratio, write, for the controller 101, the metadata about the to-be-read data into the memory 103, and read, for the controller, the to-be-read data based on the metadata; or when it is determined that the current ratio of the first metadata of the manipulated logical disk that is loaded into the memory to the first metadata of the manipulated logical disk reaches the setting ratio, evict, from the memory 103 by using a memory eviction algorithm, first cold metadata in the memory whose amount is equal to the metadata about the to-be-read data, and write the metadata about the to-be-read data into the memory 103. Refer to steps S407, S409, and S410.

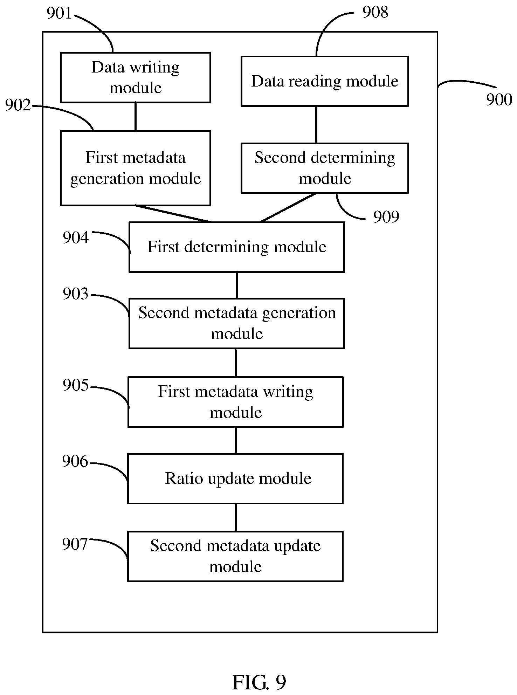

FIG. 9 is a module diagram of a storage array 900 according to a second embodiment of the present invention.

The storage array 900 includes a data writing module 901, a first metadata generation module 902, a second metadata generation module 903, a first determining module 904, a first metadata writing module 905, a ratio update module 906, a second metadata update module 907, a data reading module 908, and a second determining module 909. Functions of the data writing module 901, the first metadata generation module 902, the first determining module 904, the first metadata writing module 905, the ratio update module 906, and the second determining module 909 are the same as functions of the data writing module 801, the first metadata generation module 802, a first determining module 803, a first metadata writing module 804, an update module 805, and the second determining module 807 in the first embodiment in FIG. 8, and details are not described herein again.

The second metadata generation module 903 is configured to: generate an index number based on a logical address in a write request, add the generated index number to second metadata of a logical disk, and record an address of metadata about to-be-written data in the memory 103 into a first metadata address corresponding to the index number in FIG. 3. For details, refer to step S607 in FIG. 6.

The second metadata update module 907 is configured to change an address of second metadata corresponding to metadata evicted from the memory 103 to an address of the evicted metadata in a physical disk. For details, refer to step S610 in FIG. 6.

In this embodiment of the present invention, the data reading module 908 is configured to: receive a read request, where the read request carries a logical disk identifier, to-be-read data, and a logical address of the to-be-read data; determine, based on the logical disk identifier, a logical disk in which the to-be-read data is located; generate an index number based on the logical address in the read request; and find, from the second metadata, address information, indicated by the index number, of metadata about the to-be-read data in the logical disk. When the address information of the metadata about the to-be-read data indicates a memory address, the controller 101 reads the metadata about the to-be-read data from the memory 103, and then reads the to-be-read data based on the metadata about the to-be-read data. For details, refer to steps S701 to S703.

The second metadata update module 907 is further configured to: read the to-be-read data based on the metadata about the to-be-read data, and update, in the second metadata, an address of the metadata about the to-be-read data that is read into the memory to a memory address, and an address of the metadata evicted from the memory to a physical disk address. For details, refer to step S711.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for managing performance of a logical disk, wherein the method is performed by a controller of a storage array, the storage array further comprises a memory and a physical disk, a plurality of logical disks are created on the physical disk, each logical disk corresponds to a setting ratio, and the setting ratio is a preset ratio of first metadata of each logical disk that is loaded into the memory to first metadata of each logical disk, wherein the first metadata of each logical disk is metadata about data in each logical disk; and the method comprises:
when metadata about to-be-manipulated data in a manipulated logical disk is to be written into the memory, determining whether a current ratio of first metadata of the manipulated logical disk that is loaded into the memory to first metadata of the manipulated logical disk reaches a setting ratio corresponding to the manipulated logical disk; and
when the current ratio reaches the setting ratio corresponding to the manipulated logical disk, evicting, by using a memory eviction algorithm, a part of the first metadata of the manipulated logical disk in the memory, and storing the metadata about the to-be-manipulated data to the memory.

2. The method according to claim 1, wherein the method further comprises: when the current ratio of the first metadata of the manipulated logical disk that is loaded into the memory to the first metadata of the manipulated logical disk does not reach the setting ratio corresponding to the manipulated logical disk, storing the metadata about the to-be-manipulated data to the memory, and updating the current ratio.

3. The method according to claim 1 or 2, wherein each logical disk further comprises second metadata, wherein the second metadata is used to indicate the first metadata of each logical disk that is loaded into the memory; and the method comprises:
after the metadata about the to-be-manipulated data is written into the memory, recording a storage address of the metadata about the to-be-manipulated data in the memory into the second metadata; and
when the part of the first metadata of the manipulated logical disk is evicted from the memory, recording an address of the evicted metadata in the physical disk into the second metadata.

4. The method according to claim 3, wherein the method further comprises:
receiving a write request, wherein the write request comprises to-be-written data, a logical unit number, and a logical address of the to-be-written data, the to-be-manipulated data is the to-be-written data, and the logical unit number indicates the manipulated logical disk;
when the to-be-written data is written into a physical disk corresponding to the to-be-manipulated logical disk, generating metadata about the to-be-written data;
storing the metadata about the to-be-written data to the physical disk corresponding to the to-be-manipulated logical disk and the memory; and
updating the current ratio.

5. The method according to claim 4, wherein the method further comprises:
when the metadata about the to-be-written data is written into the memory, generating an index number based on the logical address of the to-be-written data, and recording the generated index number and an address of the metadata about the to-be-written data in the memory into the second metadata.

6. The method according to any one of claims 1 to 5, wherein the method further comprises:
receiving a read request;
determining whether metadata about to-be-read data in the read request is stored in the memory, wherein the to-be-manipulated data is the to-be-read data; and
if the metadata about the to-be-read data in the read request is not stored in the memory, obtaining the metadata about the to-be-read data from the manipulated physical disk, and writing the metadata about the to-be-read data into the memory.

7. The method according to claim 6, wherein the determining whether metadata about to-be-read data is stored in the memory comprises:
generating an index number based on a logical address of the to-be-read data in the read request; and
searching, based on the index number, the second metadata of the manipulated logical disk for an address that corresponds to the index number and that is of the metadata about the to-be-read data; and when the second metadata indicates that the address of the metadata about the to-be-read data is in the memory, obtaining the metadata about the to-be-read data from the memory; or when the second metadata indicates that the address of the metadata about the to-be-read data is not in the memory, obtaining the metadata about the to-be-read data from the physical disk.

8. A storage array, wherein the storage array comprises a memory and at least one physical disk, at least one logical disk is created on the physical disk, each logical disk corresponds to a setting ratio, and the setting ratio is a preset ratio of first metadata of each logical disk that is loaded into the memory to first metadata of each logical disk, wherein the first metadata of each logical disk is metadata about data in each logical disk; and the storage array further comprises:
a determining module, configured to: when metadata about to-be-manipulated data in a manipulated logical disk is to be written into the memory, determine whether a current ratio of first metadata of the manipulated logical disk that is loaded into the memory to first metadata of the manipulated logical disk reaches a setting ratio corresponding to the manipulated logical disk; and
a writing module, configured to: when the current ratio reaches the setting ratio corresponding to the manipulated logical disk, evict, by using a memory eviction algorithm, a part of the first metadata of the manipulated logical disk in the memory, and store the metadata about the to-be-manipulated data to the memory.

9. The storage array according to claim 8, wherein the writing module is further configured to: when the current ratio of the first metadata of the manipulated logical disk that is loaded into the memory to the first metadata of the manipulated logical disk does not reach the setting ratio corresponding to the manipulated logical disk, store the metadata about the to-be-manipulated data to the memory, and update the current ratio.

10. The storage array according to claim 8 or 9, wherein each logical disk further comprises second metadata, wherein the second metadata is used to indicate whether the first metadata is in the memory; and the storage array further comprises a recording module, wherein the recording module is configured to:
each logical disk further comprises the second metadata, wherein the second metadata is used to indicate the metadata of each logical disk that is loaded into the memory, and the method comprises:
after the metadata about the to-be-manipulated data is written into the memory, record a storage address of the metadata about the to-be-manipulated data in the memory into the second metadata; and
when the part of the first metadata of the manipulated logical disk is evicted from the memory, record an address of the evicted metadata in the physical disk into the second metadata.

11. The storage array according to claim 10, wherein the storage array further comprises:
a data writing module, configured to receive a write request, wherein the write request comprises to-be-written data, a logical unit number, and a logical address of the to-be-written data, the to-be-manipulated data is the to-be-written data, and the logical unit number indicates the manipulated logical disk; and
a generation module, configured to: when the to-be-written data is written into a physical disk corresponding to the to-be-manipulated logical disk, generate metadata about the to-be-written data; wherein
the writing module is further configured to store the metadata about the to-be-written data to the physical disk corresponding to the to-be-manipulated logical disk, and update the current ratio.

12. The storage array according to claim 10, wherein
the recording module is further configured to: when metadata about the to-be-written data is written into the memory, generate an index number based on a logical address of the to-be-written data, and record the generated index number and an address of the metadata about the to-be-written data in the memory into the second metadata.

13. The storage array according to any one of claims 8 to 12, wherein the storage array further comprises:
a read metadata module, configured to: receive a read request; determine whether metadata about to-be-read data is stored in the memory, wherein the to-be-manipulated data is the to-be-read data; and if the metadata about the to-be-read data is not stored in the memory, obtain the metadata about the to-be-read data from the manipulated physical disk, and write the metadata about the to-be-read data into the memory.

14. The storage array according to claim 13, wherein when determining whether the metadata about to-be-read data is stored in the memory, the read metadata module is specifically configured to:
generate an index number based on a logical address of the to-be-read data in the read request; and
search, based on the index number, the second metadata of the manipulated logical disk for an address that corresponds to the index number and that is of the metadata about the to-be-read data; and when the second metadata indicates that the address of the metadata about the to-be-read data is in the memory, obtain the metadata about the to-be-read data from the memory; or when the second metadata indicates that the address of the metadata about the to-be-read data is not in the memory, obtain the metadata about the to-be-read data from the physical disk.
